# EUROPÄISCHE PATENTSCHRIFT

(11) **EP 3 390 044 B1**
(45) Veröffentlichungstag und Bekanntmachung des Hinweises auf die Patenterteilung: **20.03.2024**
(21) Anmeldenummer: 16825716.0
(22) Anmeldetag: 15.12.2016
(51) Int. Cl.: B32B 17/10

(54) **BEHEIZBARES VERBUNDGLAS MIT DÜNNER INNENSCHEIBE UND DÜNNER AUSSENSCHEIBE**
HEATABLE LAMINATED GLASS WITH THIN INTERNAL PANE AND THIN OUTSIDE PANE
VERRE FEUILLETE POUVANT ETRE CHAUFFE DOTE D'UNE VITRE INTERNE FINE ET VITRE EXTERNE FINE

(30) Priorität: 16.12.2015 EP 15200334
(43) Veröffentlichungstag der Anmeldung: 24.10.2018
(73) Patentinhaber: SAINT-GOBAIN GLASS FRANCE, 92400 Courbevoie (FR)
(72) Erfinder: SCHALL, Günther, 52372 Kreuzau (DE); SCHULZ, Valentin, 52382 Niederzier (DE)
(74) Vertreter: Gebauer, Dieter Edmund
(86) Internationale Anmeldenummer: PCT/EP2016/081323
(87) Internationale Veröffentlichungsnummer: WO 2017/103032

(56) Entgegenhaltungen:
- EP-B1- 2 421 704
- WO-A1-2015/058885
- WO-A1-2015/158464
- US-A1- 2014 017 472

## Beschreibung

Die Erfindung betrifft ein beheizbares Verbundglas mit einer dünnen Innenscheibe und einer dünnen Außenscheibe, ein Verfahren zu dessen Herstellung und dessen Verwendung.

Verbundgläser sind als Verglasungen im Fahrzeugbereich hinlänglich bekannt. Sie bestehen üblicherweise aus zwei Glasscheiben mit einer Dicke von 2 mm bis 3 mm, welche mittels einer thermoplastischen Zwischenschicht miteinander verbunden sind. Solche Verbundgläser werden insbesondere als Windschutzscheiben und Dachscheiben, zunehmend aber auch als Seitenscheiben und Heckscheiben eingesetzt.

Aktuell ist die Fahrzeugindustrie bemüht, das Gewicht der Fahrzeuge zu reduzieren, was mit einem reduzierten Treibstoffverbrauch einhergeht. Einen bedeutenden Beitrag hierzu kann eine Reduzierung des Gewichts der Verglasungen leisten, was insbesondere durch verringerte Scheibendicken zu erreichen ist. Solche dünnen Scheiben weisen insbesondere Dicken kleiner als 2 mm auf. Trotz der verringerten Scheibendicken müssen jedoch die Anforderungen an Stabilität und Bruchfestigkeit der Scheiben gewährleistet sein.

EP 2421704 B1 offenbart eine gewichtsreduzierte Verbundglasscheibe, deren Steinschlagfestigkeit durch den unsymmetrischen Verbundaufbau vorteilhaft erhöht ist. Dadurch genügt die Scheibe den hohen Anforderungen an Sicherheitsverglasungen in Fahrzeugen (ECE-R 43:2004) bezüglich mechanischer Steifigkeit und Festigkeit sowie Steinschlagfestigkeit.

In modernen Kraftfahrzeugen werden häufig beheizbare Windschutzscheiben, Seitenscheiben oder Heckscheiben verwendet werden, um die Fahrzeugfenster frei von Eis und Kondenswasser zu halten. Die in der Scheibe vorliegenden Heizelemente sollten für den Betrachter sowohl aus ästhetischen Gründen, als auch unter Sicherheitsaspekten nicht oder kaum sichtbar sein. Das Sichtfeld von Windschutzscheiben darf aufgrund gesetzlicher Vorgaben keine Sichteinschränkungen aufweisen. Drahtförmige heizbare Elemente in Windschutzscheiben entsprechen zwar diesen gesetzlichen Vorgaben, jedoch verursachen die Drähte besonders bei Dunkelheit und Gegenlicht störende Reflexionen. In den letzten Jahren werden besonders im Automobilbereich verstärkt Scheiben mit einer infrarotreflektierenden elektrisch leitfähigen Beschichtung eingesetzt. Derartige Beschichtungen verfügen einerseits über eine gute elektrische Leitfähigkeit, die eine Beheizung der Scheibe ermöglicht und darüber hinaus über infrarotreflektierende Eigenschaften, die eine unerwünschte Erwärmung des Innenraums durch Sonneneinstrahlung vermindern. Diese Schichtsysteme sind somit nicht nur hinsichtlich sicherheitsrelevanter Aspekte, wie einer uneingeschränkten Sicht, sondern auch unter ökologischen Gesichtspunkten, wie einer Reduzierung des Schadstoffausstoßes, und einer Verbesserung des Fahrzeugkomforts von besonderer Bedeutung. Diverse Beispiele für solche funktionellen Beschichtungen sind beispielsweise IR-reflektierende Beschichtungen oder beheizbare Beschichtungen. Wärmestrahlung reflektierende Beschichtungen sind beispielsweise aus EP 2 141 135 A1, WO 2010115558 A1 und WO 2011105991 A1 bekannt, beheizbare Beschichtungen beispielsweise aus WO 03/024155 A2, US 2007/0082219 A1 und US 2007/0020465 A1. Auf dem Gebiet der heizbaren Beschichtungen haben darüber hinaus weitere Verbesserungen stattgefunden, die eine Reduzierung des Flächenwiderstands bewirken und so eine höhere Heizleistung der Scheibe ermöglichen. WO 2013/104439 und WO 2013/104438 offenbaren elektrisch leitfähige Beschichtungen umfassend einen Schichtstapel mit mindestens zwei leitfähigen Schichten sowie mehreren dielektrischen Schichten. Diese Beschichtungen verfügen über sehr niedrige Schichtwiderstände, beispielsweise 0,7 Ω/□ und sind somit auch zur Beheizung großflächiger Scheiben sehr gut geeignet. Üblicherweise werden diese Beschichtungen auf eine der Glasscheiben einer Verbundscheibe aufgebracht, insbesondere durch Kathodenzerstäubung (Sputtern).

Im Zuge hoher Umweltbelastungen und strenger werdender Umweltschutzvorschriften ist es wünschenswert den Schadstoffausstoß von Fahrzeugen zu senken. Dies kann einerseits indirekt durch Gewichtsreduktion von Fahrzeugkomponenten und andererseits auch direkt durch Senkung des Kraftstoffverbrauchs geschehen. Zum Kraftstoffverbrauch von Fahrzeugen tragen unter anderem im Fahrzeug fest integrierte Verbraucher wie Klimaanlagen oder auch beheizbare Scheiben bei. Somit ist es besonders wünschenswert den Energieverbrauch beheizbarer Fahrzeugscheiben zu senken.

Die WO 2015/158464 zeigt ein Verbundglas mit einer Innenscheibe einer Dicke von 0,1 mm bis 0,4 mm. Die WO 2015058885 zeigt ein Verbundglas, bei dem eine funktionelle Beschichtung auf einer Trägerschicht angeordnet ist. WO2015058885 offenbart ein Fahrzeug-Verbundglas umfassend eine Innenscheibe und eine Außenscheibe aus Glas und eine thermoplastische Zwischenschicht, welche die Innenscheibe mit der Außenscheibe verbindet, wobei auf der Innenseite einer der Scheiben eine elektrisch leitfähige Beschichtung aufgebracht ist, wobei beide Scheiben aus chemisch vorgespanntem Glas bestehen und eine Dicke von jeweils 0,7 mm aufweisen.

Der Erfindung liegt die Aufgabe zugrunde, ein beheizbares Verbundglas mit reduziertem Energieverbrauch bei gleichbleibender Beheizung, das eine hinreichende Stabilität und Bruchfestigkeit aufweist, um im Fahrzeugbereich eingesetzt werden zu können, sowie ein Verfahren zu dessen Herstellung und dessen Verwendung bereitzustellen.

Die Aufgabe der vorliegenden Erfindung wird erfindungsgemäß durch ein Verbundglas gemäß Anspruch 1, ein Verfahren zu dessen Herstellung und dessen Verwendung mit den Merkmalen der nebengeordneten Ansprüche gelöst. Bevorzugte Ausführungen gehen aus den Unteransprüchen hervor.

Das erfindungsgemäße Verbundglas ist bevorzugt ein Verbundglas für Fahrzeuge (Fahrzeug-Verbundglas). Das Verbundglas ist dafür vorgesehen, in einer Öffnung, insbesondere einer Fensteröffnung eines Fahrzeugs, den Innenraum gegenüber der äußeren Umgebung abzutrennen.

Das erfindungsgemäße Verbundglas (oder Verbundscheibe) umfasst mindestens eine Innenscheibe, eine Außenscheibe und eine thermoplastische Zwischenschicht, welche die Innenscheibe mit der Außenscheibe verbindet, sowie eine elektrisch beheizbare Beschichtung auf der Innenseite der Innenscheibe oder der Innenseite der Außenscheibe, wobei die Außenscheibe eine nicht vorgespannte Scheibe ist. Die Innenseite der Innenscheibe ist die in Richtung der thermoplastischen Zwischenschicht gerichtete Oberfläche der Innenscheibe, während die Außenseite der Innenscheibe in Einbaulage zum Fahrzeuginnenraum orientiert ist. Die Innenseite der Außenscheibe ist ebenfalls zur thermoplastischen Zwischenschicht ausgerichtet, wohingegen die Außenseite der Außenscheibe zur Fahrzeugumgebung weist. Die Innenscheibe und die Außenscheibe bestehen aus Glas. Die Dicke der Innenscheibe beträgt 0.6-1.0 mm und die Dicke der Außenscheibe beträgt 0.7-1.4 mm, wobei die Außenscheibe dicker ist als die Innenscheibe.

Die Kombination einer elektrisch beheizbaren Beschichtung mit einem Verbundglas mit einer solchen dünnen Innenscheibe und dünnen Außenscheibe ist besonders vorteilhaft, da durch eine Reduzierung der Materialstärke die zu erwärmende Masse verringert wird, wodurch ein reduzierter Energieverbrauch bei gleichbleibender Heizleistung erreicht werden kann. Ferner verfügt das erfindungsgemäße Verbundglas über eine hinreichende Stabilität und Bruchfestigkeit um im Fahrzeugbereich eingesetzt werden zu können.

Mit Innenscheibe wird im Sinne der Erfindung die dem Innenraum (Fahrzeuginnenraum) zugewandte Scheibe der Verbundscheibe bezeichnet. Mit Außenscheibe wird die der äußeren Umgebung zugewandte Scheibe bezeichnet.

Es hat sich gezeigt, dass ein Verbundglas mit den erfindungsgemäßen Dicken für die Außenscheibe und die Innenscheibe eine überraschend hohe Stabilität und Bruchfestigkeit, insbesondere Kratzfestigkeit und Steinschlagfestigkeit aufweist. Die Innenscheibe kann also eine deutlich geringere Dicke aufweisen als bislang allgemein angenommen. Die Stabilität und Bruchfestigkeit des Verbundglases wird durch die erfindungsgemäße Auswahl der Dicke der Außenscheibe und die ausgeprägte Asymmetrie der Außen und der Innenscheibe im Hinblick auf die Dicke bewirkt. Überraschend erfüllt das erfindungsgemäße Verbundglas die hohen Sicherheitsanforderungen im Fahrzeugbereich. Diese Anforderungen werden typischerweise durch standardisierte Bruch-, Schlag und Kratztests überprüft, wie beispielsweise durch den Kugelfalltest gemäß ECE R43.

Das erfindungsgemäße Verbundglas ist besonders bevorzugt eine Windschutzscheibe eines Kraftfahrzeugs.

In einer bevorzugten Ausgestaltung ist die Innenscheibe eine vorgebogene Scheibe, also eine Scheibe, die vor der Lamination zum Verbundglas einem thermischen Biegeprozess unterzogen wurde. Zwar kann die Innenscheibe prinzipiell auch eine nicht-vorgebogene Scheibe sein, die sich aufgrund ihrer geringen Dicke beim Laminieren an die Form der Außenscheibe anpasst. Jedoch ist vorteilhaft, insbesondere bei sogenannten dreidimensionalen Biegungen in mehreren Richtungen des Raums, eine vorgebogene Innenscheibe zu verwenden, weil die gewünschte Form dann mit geringen optischen Verzerrungen erreicht werden kann. Da der Biegeprozess eine charakteristische Signatur in der Glasstruktur hinterlässt, kann der Fachmann eine vorgebogene und eine nicht-vorgebogene durch Sichtprüfung voneinander unterscheiden.

Die dickere Außenscheibe ist erfindungsgemäß vorgebogen. Die Außenscheibe und die Innenscheibe sind bevorzugt kongruent vorgebogen, das heißt sie weisen die gleiche Vorbiegung auf.

Die Innenscheibe kann beispielsweise eine Dicke von 0,6 mm, 0,7 mm, 0,8 mm, 0,9 mm, 1,0 mm aufweisen.

Die Außenscheibe kann beispielsweise eine Dicke von 0,7 mm, 0,8 mm, 0,9 mm, 1,0 mm, 1,1 mm, 1,2 mm, 1,3 mm, 1,4 mm aufweisen.

Die Innenscheibe weist eine Dicke von 0,6 mm bis 1,0 mm auf. Die Außenscheibe weist eine Dicke von 0,7 mm bis 1,4 mm. Diese Bereiche sind vorteilhaft hinsichtlich eines geringeren Gewichts des Verbundglases bei hoher Stabilität und Bruchfestigkeit.

Gemäß der Erfindung ist die Außenscheibe nicht vorgespannt, insbesondere chemisch nicht vorgespannt.

Gemäß der Erfindung haben die Außenscheibe und die Innenscheibe unterschiedliche Dicken, wobei die Außenscheibe dicker ist als die Innenscheibe. Diese Dickenasymmetrie zwischen Außenscheibe und Innenscheibe bewirkt eine hohe Stabilität.

Gemäß der Erfindung ist die Außenscheibe eine nicht-vorgespannte Scheibe. Die Außenscheibe kann Belastungen wie Steinschlag ausgesetzt sein. Trifft ein Stein, insbesondere ein kleiner, spitzer Stein auf eine Glasscheibe, so kann er deren Oberfläche durchdringen. Im Falle einer vorgespannten Scheibe kann der Stein so in die Zugspannungszone im Scheibeninneren eindringen, was zu einem Zerspringen der Scheibe führt. Eine nicht-vorgespannte Außenscheibe weißt eine breiter Druckspannungszone und geringere Zugspannung im Inneren auf und ist dadurch weniger anfällig gegenüber dem Einschlag eines spitzen Körpers. Eine nicht-vorgespannte Außenscheibe ist daher insgesamt sehr vorteilhaft im Hinblick auf die Sicherheit der Fahrzeuginsassen.

In einer bevorzugten Ausgestaltung der Erfindung enthält die Außenscheibe Kalk-Natron-Glas oder Borsilikatglas, insbesondere Kalk-Natron-Glas. Kalk-Natron-Glas ist kostengünstig verfügbar und hat sich für Anwendungen im Fahrzeugbereich bewährt.

In einer vorteilhaften Ausgestaltung der Erfindung ist die Innenscheibe eine chemisch vorgespannte Scheibe. Durch die Vorspannung kann die Innenscheibe mit einer besonderen Bruchstabilität und Kratzfestigkeit versehen werden. Für eine sehr dünne Glasscheibe, wie sie erfindungsgemäß als Innenscheibe vorgesehen ist, ist das chemische Vorspannen dabei besser geeignet als das thermische Vorspannen. Da thermisches Vorspannen auf einer Temperaturdifferenz zwischen einer Oberflächenzone und einer Kernzone beruht, setzt thermisches Vorspannen eine Mindestdicke der Glasscheibe voraus. Hinreichende Spannungen können typischerweise mit handelsüblichen thermischen Vorspannvorrichtungen bei Glasdicken ab etwa 2,5 mm erreicht werden. Bei geringeren Glasdicken können in der Regel nicht die allgemein geforderten Werte für die Vorspannung erreicht werden (vgl. beispielsweise die ECE-Regelung 43). Beim chemischen Vorspannen wird durch lonenaustausch die chemische Zusammensetzung des Glases im Bereich der Oberfläche verändert, wobei der lonenaustausch durch Diffusion auf eine Oberflächenzone beschränkt ist. Chemisches Vorspannen ist daher besonders für dünne Scheiben geeignet. Für das chemische Vorspannen sind auch die Bezeichnungen chemisches Tempern, chemisches Härten oder chemisches Verfestigen gebräuchlich.

Die Stabilität der Innenscheibe kann durch geeignete Werte und lokale Verteilungen der Spannungen, welche durch die Einlagerung von Ionen beim chemischen Vorspannen erzeugt werden, verbessert werden.

Die chemisch vorgespannte Innenscheibe weist bevorzugt eine Oberflächendruckspannung von größer als 100 MPa, bevorzugt größer als 250 MPa und besonders bevorzugt größer 350 MPa auf.

Die Druckspannungstiefe der Scheibe beträgt insbesondere mindestens ein Zehntel ihrer Dicke, bevorzugt mindestens ein Sechstel ihrer Dicke, beispielsweise etwa ein Fünftel der Dicke der Innenscheibe. Das ist vorteilhaft im Hinblick auf die Bruchfestigkeit der Scheibe einerseits und einen wenig zeitintensiven Vorspannprozess andererseits. Mit Druckspannungstiefe wird im Sinne der Erfindung die Tiefe gemessen von der Oberfläche der Scheibe bezeichnet, bis zu der die Scheibe Druckspannungen mit einem Betrag größer 0 MPa steht. Weist die Innenscheibe beispielsweise eine Dicke von 0,3 mm auf, so beträgt die Druckspannungstiefe der Innenscheibe bevorzugt größer als 30 µm, besonders bevorzugt größer als 50 µm, ganz besonders bevorzugt zwischen 100 µm und 150 µm.

Die Innenscheibe kann grundsätzlich jede dem Fachmann bekannte chemische Zusammensetzung aufweisen. Die Innenscheibe kann beispielweise Kalk-Natron-Glas oder Borsilikatglas enthalten oder aus diesen Gläsern bestehen. Bevorzugt sollte sich die Innenscheibe dazu eignen, chemisch vorgespannt zu werden, und insbesondere einen dazu geeigneten Anteil an Alkalielementen, bevorzugt Natrium aufweisen. Die Innenscheibe kann beispielsweise von 40 Gew-% bis 90 Gew-% Siliziumoxid (SiO₂), von 0,5 Gew-% bis 10 Gew-% Aluminiumoxid (Al₂O₃), von 1 Gew-% bis 20 Gew-% Natriumoxid (Na₂O), von 0,1 Gew-% bis 15 Gew-% Kaliumoxid (K₂O), von 0 Gew-% bis 10 Gew-% Magnesiumoxid (MgO), von 0 Gew-% bis 10 Gew-% Kalziumoxid (CaO) und von 0 Gew-% bis 15 Gew-% Boroxid (B₂O₃) enthalten. Die Innenscheibe kann außerdem weitere Bestandteile und Verunreinigungen enthalten.

Es hat sich jedoch überraschend gezeigt, dass bestimmte chemische Zusammensetzungen der Innenscheibe besonders dazu geeignet sind, einem chemischen Vorspannen unterzogen zu werden. Dies äußert sich in einer hohen Geschwindigkeit des Diffusionsprozesses, was zu einem vorteilhaft geringen Zeitaufwand für den Vorspannprozess führt, und großen Vorspanntiefen (Druckspannungstiefen), was zu stabilen und bruchfesten Gläsern führt. Diese Zusammensetzungen sind im Sinne der Erfindung bevorzugt.

Die Innenscheibe enthält in einer bevorzugten Ausgestaltung ein Aluminosilikatglas. Die Innenscheibe enthält bevorzugt von 50 Gew-% bis 85 Gew-% Siliziumoxid (SiO₂), von 3 Gew-% bis 10 Gew-% Aluminiumoxid (Al₂O₃), von 8 Gew-% bis 18 Gew-% Natriumoxid (Na₂O), von 5 Gew-% bis 15 Gew-% Kaliumoxid (K₂O), von 4 Gew-% bis 14 Gew-% Magnesiumoxid (MgO), von 0 Gew-% bis 10 Gew-% Kalziumoxid (CaO) und von 0 Gew-% bis 15 Gew-% Boroxid (B₂O₃). Die Innenscheibe kann außerdem weitere Bestandteile und Verunreinigungen enthalten. Die Innenscheibe enthält besonders bevorzugt zumindest von 55 Gew-% bis 72 Gew-% (ganz besonders bevorzugt von 57 Gew-% bis 65 Gew-%) Siliziumoxid (SiO₂), von 5 Gew-% bis 10 Gew-% (ganz besonders bevorzugt von 7 Gew-% bis 9 Gew-%) Aluminiumoxid (Al₂O₃), von 10 Gew-% bis 15 Gew-% (ganz besonders bevorzugt von 12 Gew-% bis 14 Gew-%) Natriumoxid (Na₂O), von 7 Gew-% bis 12 Gew-% (ganz besonders bevorzugt von 8,5 Gew-% bis 10,5 Gew-%) Kaliumoxid (K₂O) und von 6 Gew-% bis 11 Gew-% (ganz besonders bevorzugt von 7,5 Gew-% bis 9,5 Gew-%) Magnesiumoxid (MgO).

Diese bevorzugten Glaszusammensetzungen haben neben der Möglichkeit des chemischen Vorspannens einen weiteren überraschenden Vorteil. Solche Scheiben sind dazu geeignet, zusammen mit Scheiben aus herkömmlichem Kalk-Natron-Glas (auch Normalglas genannt) kongruent gebogen zu werden. Hierfür sind ähnliche thermische Eigenschaften verantwortlich, so dass die beiden Glasarten im gleichen Temperaturbereich biegbar werden, nämlich etwa von 450 °C bis 700 °C. Wie dem Fachmann hinreichend bekannt ist, eignen sich kongruent gebogene Scheiben aufgrund ihrer optimal aufeinander angepassten Form in besonderer Weise dazu, zu einem Verbundglas verbunden zu werden. Eine Innenscheibe mit den bevorzugten chemischen Zusammensetzungen ist also besonders geeignet, in einem Verbundglas mit einer Außenscheibe anderer Zusammensetzung, insbesondere aus Kalk-Natron-Glas, verwendet zu werden.

Die Innenscheibe kann alternativ aber auch eine nicht-vorgespannte Scheibe sein. Insbesondere bei sehr dünnen Glasscheiben nehmen die Spannungswerte, die durch das chemische Vorspannen erreicht werden können, und damit die stabilisierende Wirkung immer mehr ab. Ist die Innenscheibe nicht vorgespannt, so enthält sie in einer bevorzugten Ausgestaltung Borosilikatglas. Es hat sich gezeigt, dass damit eine besonders ausgeprägte Stabilität und Bruchfestigkeit erreicht werden kann.

Die thermoplastische Zwischenschicht enthält mindestens eine thermoplastische Folie und ist in einer vorteilhaften Ausgestaltung durch eine einzelne thermoplastische Folie ausgebildet. Das ist vorteilhaft hinsichtlich eines einfachen Aufbaus und einer geringen Gesamtdicke des Verbundglases. Die thermoplastische Zwischenschicht beziehungsweise die thermoplastische Folie enthält bevorzugt zumindest Polyvinylbutyral (PVB), Ethylenvinylacetat (EVA), Polyurethan (PU) oder Gemische oder Copolymere oder Derivate davon, die sich für Verbundgläser bewährt haben.

Die Dicke der thermoplastischen Zwischenschicht beträgt bevorzugt von 0,2 mm bis 1,0 mm. Beispielsweise können thermoplastische Folie der Standarddicke von 0,76 mm verwendet werden.

Die Außenscheibe, die Innenscheibe und die thermoplastische Zwischenschicht können klar und farblos, aber auch getönt oder gefärbt sein. Die Gesamttransmission durch das Verbundglas beträgt in einer bevorzugten Ausgestaltung größer 70%, insbesondere wenn das Verbundglas eine Windschutzscheibe ist. Der Begriff Gesamttransmission bezieht sich auf das durch ECE-R 43, Anhang 3, § 9.1 festgelegte Verfahren zur Prüfung der Lichtdurchlässigkeit von Kraftfahrzeugscheiben.

Das Verbundglas ist bevorzugt in einer oder in mehreren Richtungen des Raumes gebogen, wie es für Kraftfahrzeugscheiben üblich ist, wobei typische Krümmungsradien im Bereich von etwa 10 cm bis etwa 40 m liegen. Das Verbundglas kann aber auch plan sein, beispielsweise wenn es als Scheibe für Busse, Züge oder Traktoren vorgesehen ist.

Das erfindungsgemäße Verbundglas verfügt über eine elektrisch beheizbare Beschichtung auf der Innenseite der Innenscheibe oder der Innenseite der Außenscheibe. Die elektrisch beheizbare Beschichtung ist bevorzugt auf der Außenscheibe angeordnet. Die in einer bevorzugten Ausführungsform dickere Außenscheibe, die zudem bevorzugt aus Normalglas besteht, lässt sich technisch einfacher und kostengünstiger beschichten, beispielweise durch physikalische Gasphasenabscheidung (wie Sputtern) als die in der Regel dünnere Innenscheibe. Insbesondere lässt sich eine Beschichtung und eine chemische Vorspannung technisch nur sehr schwierig kombinieren. Eine vor dem Vorspannen aufgebrachte Beschichtung stört den lonendiffusionsprozess beim chemischen Vorspannen. Ein Beschichten nach dem chemischen Vorspannen ändert aufgrund der typischen hohen Temperaturen die Spannungsverteilung in der Scheibe. Die funktionelle Beschichtung ist bevorzugt auf der zur thermoplastischen Zwischenschicht hingewandten Innenseite der Außenscheibe angeordnet, wo sie vor Korrosion und Beschädigung geschützt ist.

Die elektrisch beheizbare Beschichtung kann auch auf der Innenseite der Innenscheibe abgeschieden werden, insbesondere wenn die Innenscheibe nicht chemisch vorgespannt ist.

Die elektrisch beheizbare Beschichtung kann sich über die gesamte Innenseite der Innenscheibe oder Außenscheibe erstrecken. Die elektrisch beheizbare Beschichtung kann sich alternativ aber auch nur über einen Teil der Oberfläche erstrecken. Die elektrisch beheizbare Beschichtung erstreckt sich bevorzugt über mindestens 50%, besonders bevorzugt über mindestens 70% und ganz besonders bevorzugt über mindestens 90% der Oberfläche des transparenten Substrats.

Geeignete Materialzusammensetzungen der elektrisch beheizbaren Beschichtung sind beispielsweise WO 2013/104439 und WO 2013/104438 zu entnehmen.

Bevorzugt umfasst die elektrisch beheizbare Beschichtung mindestens zwei funktionelle Schichten die flächendeckend übereinander angeordnet sind. Jede funktionelle Schicht umfasst dabei mindestens
- die elektrisch leitfähige Beschichtung (2) mindestens zwei übereinander angeordnete funktionelle Schichten (3) aufweist und jede funktionelle Schicht (3) mindestens
   ∘ eine Antireflexionsschicht (4),
   ∘ oberhalb der Antireflexionsschicht (4) eine erste Anpassungsschicht (6) und
   ∘ oberhalb der ersten Anpassungsschicht (6) eine elektrisch leitfähige Schicht (7) umfasst und
- zumindest eine zwischen zwei elektrisch leitfähigen Schichten (7) angeordnete Antireflexionsschicht (4) mindestens
   o eine Schicht eines dielektrischen Materials (9) mit einem Brechungsindex kleiner 2,1 und
eine Schicht eines optisch hochbrechenden Materials (10) mit einem Brechungsindex größer oder gleich 2,1 umfasst.

Die Schichten sind in der angegebenen Reihenfolge mit wachsendem Abstand zu der Scheibe, auf die die Beschichtung aufgebracht ist, angeordnet. Oberhalb der obersten funktionellen Schicht ist eine Abdeckschicht angeordnet.

Durch die entsprechende Ausgestaltung der elektrisch beheizbaren Beschichtung wird ein vorteilhaft verringerter Flächenwiderstand und damit einhergehende verbesserte Reflexionseigenschaften für den Infrarotbereich und eine verbesserte spezifische Heizleistung erreicht. Die optischen Eigenschaften der erfindungsgemäßen transparenten Scheibe mit elektrisch leitfähiger Beschichtung genügen dabei den gesetzlichen Anforderungen an Verglasungen im Fahrzeugbau.

Bevorzugt weist die elektrisch beheizbare Beschichtung einen Flächenwiderstand von 0,4 Ohm/Quadrat bis 0,9 Ohm/Quadrat auf, beispielsweise 0,9 Ohm/Quadrat, 0,7 Ohm/Quadrat oder 0,5 Ohm/Quadrat.

Bevorzugt beträgt die Gesamtschichtdicke aller elektrisch leitfähigen Schichten zwischen 50 nm bis 60 nm.

Bevorzugt ist oberhalb der obersten funktionellen Schicht eine weitere Antireflexionsschicht angeordnet.

Bevorzugt sind die oberste und die unterste Antireflexionsschicht als Schichten eines optisch hochbrechenden Materials mit einem Brechungsindex größer oder gleich 2,1 ausgestaltet und enthalten bevorzugt zumindest ein Silizium-Metall-Mischnitrid, besonders bevorzugt ein Silizium-Zirkonium-Mischnitrid, wie Aluminium-dotiertes Silizium-Zirkonium-Mischnitrid.

Bevorzugt beträgt die Dicke der Schicht eines optisch hochbrechenden Materials von 10 % bis 99 %, bevorzugt von 25 % bis 75 % der Dicke der Antireflexionsschicht, welche die Schicht optisch hochbrechenden Materials umfasst.

Bevorzugt umfasst jede zwischen zwei elektrisch leitfähigen Schichten angeordnete Antireflexionsschicht mindestens eine Schicht eines dielektrischen Materials mit einem Brechungsindex kleiner 2,1 und eine Schicht eines optisch hochbrechenden Materials mit einem Brechungsindex größer oder gleich 2,1.

Bevorzugt beträgt die Dicke der zwischen zwei elektrisch leitfähigen Schichten angeordneten Antireflexionsschichten von 35 nm bis 70 nm, bevorzugt von 45 nm bis 60 nm.

Bevorzugt enthält die Schicht eines optisch hochbrechenden Materials zumindest ein Silizium-Metall-Mischnitrid, besonders bevorzugt ein Silizium-Zirkonium-Mischnitrid, wie Aluminium-dotiertes Silizium-Zirkonium-Mischnitrid.

Bevorzugt enthält die Schicht eines dielektrischen Materials zumindest Siliziumnitrid.

Bevorzugt umfasst jede funktionelle Schicht oberhalb der elektrisch leitfähigen Schicht eine zweite Anpassungsschicht.

Die elektrisch leitfähige Beschichtung umfasst bevorzugt mindestens eine Glättungsschicht, die unterhalb einer der ersten Anpassungsschichten angeordnet ist und wobei bevorzugt jede funktionelle Schicht eine Glättungsschicht unterhalb der ersten Anpassungsschicht umfasst.

Bevorzugt enthält die Glättungsschicht zumindest ein nichtkristallines Oxid, bevorzugt ein nichtkristallines Mischoxid, besonders bevorzugt ein Zinn-Zink-Mischoxid, wie Antimondotiertes Zinn-Zink-Mischoxid und weist bevorzugt eine Schichtdicke von 3 nm bis 20 nm, besonders bevorzugt von 4 nm bis 12 nm auf.

Bevorzugt enthält die elektrisch leitfähige Schicht zumindest Silber oder eine silberhaltige Legierung und weist bevorzugt eine Schichtdicke von 8 nm bis 25 nm auf.

Bevorzugt enthält die erste Anpassungsschicht und/oder die zweite Anpassungsschicht Zinkoxid ZnO_{1-δ} mit 0 ≤ δ ≤ 0,01, wie beispielsweise Aluminium-dotiertes Zinkoxid, und weist bevorzugt eine Dicke von 3 nm bis 20 nm, besonders bevorzugt von 4 nm bis 12 nm auf.

Bevorzugt umfasst zumindest eine funktionelle Schicht, besonders bevorzugt jede funktionelle Schicht zumindest eine Blockerschicht, die unmittelbar oberhalb und/oder unmittelbar unterhalb der elektrisch leitfähigen Schicht angeordnet ist und die bevorzugt zumindest Niob, Titan, Nickel, Chrom oder Legierungen davon enthält, besonders bevorzugt Nickel-Chrom-Legierungen, und die bevorzugt eine Schichtdicke von 0,1 nm bis 2 nm aufweist.

In einer vorteilhaften Ausgestaltung der Erfindung ist die elektrisch beheizbare Beschichtung über Sammelleiter mit einer Spannungsquelle verbunden und eine an die elektrisch leitfähige Beschichtung angelegte Spannung weist bevorzugt einen Wert von 12 V bis 15 V auf. Die Sammelleiter, sogenannte bus bars, dienen der Übertragung elektrischer Leistung. Beispiele geeigneter Sammelleiter sind aus DE 103 33 618 B3 und EP 0 025 755 B1 bekannt.

Die Sammelleiter werden vorteilhaft durch Aufdrucken einer leitfähigen Paste hergestellt. Wird die Scheibe nach Aufbringen der elektrisch leitfähigen Beschichtung gebogen, so wird die leitfähige Paste bevorzugt vor dem Biegen und / oder beim Biegen der Scheibe eingebrannt. Die leitfähige Paste enthält bevorzugt Silber-Partikel und Glasfritten. Die Schichtdicke der eingebrannten leitfähigen Paste beträgt bevorzugt von 5 µm bis 20 µm.

In einer alternativen Ausgestaltung werden dünne und schmale Metallfolienstreifen oder Metalldrähte als Sammelleiter verwendet, die bevorzugt Kupfer und / oder Aluminium enthalten, insbesondere werden Kupferfolienstreifen mit einer Dicke von bevorzugt 10 µm bis 200 µm, beispielsweise etwa 50 µm verwendet. Die Breite der Kupferfolienstreifen beträgt bevorzugt 1 mm bis 10 mm. Der elektrische Kontakt zwischen elektrisch beheizbarer Beschichtung und Sammelleiter kann beispielsweise durch Auflöten oder Kleben mit einem elektrisch leitfähigen Kleber hergestellt werden. Ferner können die Metallfolienstreifen oder Metalldrähte beim Zusammenlegen der Verbundschichten auf die elektrisch beheizbare Beschichtung aufgelegt werden. Im späteren Autoklavprozess wird durch Einwirkung von Wärme und Druck ein sicherer elektrischer Kontakt zwischen den Sammelleitern und der Beschichtung erreicht.

Als Zuleitung zur Kontaktierung von Sammelleitern im Innern von Verbundscheiben werden im Fahrzeugbereich üblicherweise Folienleiter verwendet. Beispiele für Folienleiter werden in DE 42 35 063 A1, DE 20 2004 019 286 U1 und DE 93 13 394 U1 beschrieben.

Flexible Folienleiter, mitunter auch Flachleiter oder Flachbandleiter genannt, bestehen bevorzugt aus einem verzinnten Kupferband mit einer Dicke von 0,03 mm bis 0,1 mm und einer Breite von 2 mm bis 16 mm. Kupfer hat sich für solche Leiterbahnen bewährt, da es eine gute elektrische Leitfähigkeit sowie eine gute Verarbeitbarkeit zu Folien besitzt. Gleichzeitig sind die Materialkosten niedrig. Es können auch andere elektrisch leitende Materialien verwendet werden, die sich zu Folien verarbeiten lassen. Beispiele hierfür sind Aluminium, Gold, Silber oder Zinn und Legierungen davon.

Das Verbundglas kann auch mit einer Zusatzfunktion versehen werden, indem die thermoplastische Zwischenschicht funktionelle Einlagerungen aufweist, beispielsweise Einlagerungen mit IR-absorbierenden, UV-absorbierenden, farbgebenden oder akustischen Eigenschaften. Die Einlagerungen sind beispielsweise organische oder anorganische Ionen, Verbindungen, Aggregate, Moleküle, Kristalle, Pigmente oder Farbstoffe.

Die Erfindung wird weiter gelöst durch ein Verfahren zur Herstellung eines erfindungsgemäßen Verbundglases, wobei
(a) die Innenscheibe, die thermoplastische Zwischenschicht und die Außenscheibe in dieser Reihenfolge flächenmäßig übereinander angeordnet werden und
(b) die Innenscheibe und die Außenscheibe durch Lamination miteinander verbunden werden.

Soll das Verbundglas gebogen sein, so wird zumindest die Außenscheibe vor der Lamination einem Biegeprozess unterzogen.

In einer bevorzugten Ausführung wird die Innenscheibe ebenfalls einem Biegeprozess unterzogen. Dies ist insbesondere bei starken Biegungen in mehrere Richtungen des Raums (sogenannte dreidimensionale Biegungen) vorteilhaft.

Alternativ wird die Innenscheibe nicht vorgebogen. Dies ist besonders bei Innenscheiben mit sehr geringen Dicken vorteilhaft, da diese eine folienartige Flexibilität aufweisen und so an die vorgebogene Außenscheibe angepasst werden können, ohne selbst vorgebogen werden zu müssen.

Die Außenscheibe und die Innenscheibe können einzelnen gebogen werden. Bevorzugt werden die Außenscheibe und die Innenscheibe gemeinsam (d.h. zeitgleich und durch dasselbe Werkzeug) kongruent gebogen, weil dadurch die Form der Scheiben für die später erfolgende Laminierung optimal aufeinander abgestimmt sind. Typische Temperaturen für Glasbiegeprozesse betragen beispielsweise 500°C bis 700°C.

In einer bevorzugten Ausführung wird die Innenscheibe mit einer chemischen Vorspannung versehen. Gegenfalls wird die Innenscheibe nach dem Biegen langsam abgekühlt. Ein zu schnelles Abkühlen erzeugt thermische Spannungen in der Scheibe, die beim späteren chemischen Tempern zu Formänderungen führen können. Die Abkühlrate beträgt bevorzugt bis zur Abkühlung auf eine Temperatur von 400 °C bevorzugt von 0,05 °C/sec bis 0,5 °C/sec, besonders bevorzugt von 0,1°C/sec bis 0,3°C/sec. Durch ein derartig langsames Abkühlen können thermische Spannungen im Glas vermieden werden, welche insbesondere zu optischen Mängeln führen sowie zu einer negativen Beeinträchtigung der späteren chemischen Vorspannung. Es kann danach weiter abgekühlt werden, auch mit höheren Abkühlraten, weil unterhalb 400 °C die Gefahr der Erzeugung thermischen Spannungen gering ist.

Das chemische Vorspannen erfolgt bevorzugt bei einer Temperatur von 300 °C bis 600 °C, besonders bevorzugt von 400 °C bis 500 °C. Die Innenscheibe wird dabei mit einer Salzschmelze behandelt, beispielsweise in die Salzschmelze eingetaucht. Während der Behandlung werden insbesondere Natrium-Ionen des Glases durch größere Ionen, insbesondere größere Alkali-Ionen ausgetauscht, wobei die gewünschten Oberflächen-Druckspannungen entstehen. Die Salzschmelze ist bevorzugt die Schmelze eines Kaliumsalzes, besonders bevorzugt Kaliumnitrat (KNO₃) oder Kaliumsulfat (KSO₄), ganz besonders bevorzugt Kaliumnitrat (KNO₃).

Der lonenaustauch wird durch die Diffusion der Alkali-Ionen bestimmt. Die gewünschten Werte für die Oberflächen-Druckspannungen und Druckspannungstiefen können daher insbesondere durch die Temperatur und die Dauer des Vorspannprozesses eingestellt werden. Übliche Zeiten für die Dauer betragen von 2 Stunden bis 48 Stunden.

Nach der Behandlung mit der Salzschmelze wird die Scheibe auf Raumtemperatur abgekühlt. Anschließend wird die Scheibe gereinigt, bevorzugt mit Schwefelsäure (H₂SO₄).

Die thermoplastische Zwischenschicht wird bevorzugt als Folie bereitgestellt. Die Herstellung des Verbundglases durch Lamination erfolgt mit üblichen, dem Fachmann an sich bekannten Methoden, beispielsweise Autoklavverfahren, Vakuumsackverfahren, Vakuumringverfahren, Kalanderverfahren, Vakuumlaminatoren oder Kombinationen davon. Die Verbindung von Außenscheibe und Innenscheibe erfolgt dabei üblicherweise unter Einwirkung von Hitze, Vakuum und / oder Druck.

Die Erfindung umfasst weiter die Verwendung einer erfindungsgemäßen Verbundscheibe in einem Fahrzeug, bevorzugt einem Kraftfahrzeug, besonders bevorzugt einem Personenkraftwagen, insbesondere als Windschutzscheibe, Seitenscheibe, Rückscheibe oder Dachscheibe.

Im Folgenden wird die Erfindung anhand einer Zeichnung und Ausführungsbeispielen näher erläutert. Die Zeichnung ist eine schematische Darstellung und nicht maßstabsgetreu. Die Zeichnung schränkt die Erfindung in keiner Weise ein.

Es zeigen:
- Figuren 1a und 1: b eine Draufsicht und einen Querschnitt durch eine Ausgestaltung des erfindungsgemäßen Verbundglases und
- Figur 2: ein Flussdiagramm einer Ausführungsform des erfindungsgemäßen Verfahrens.

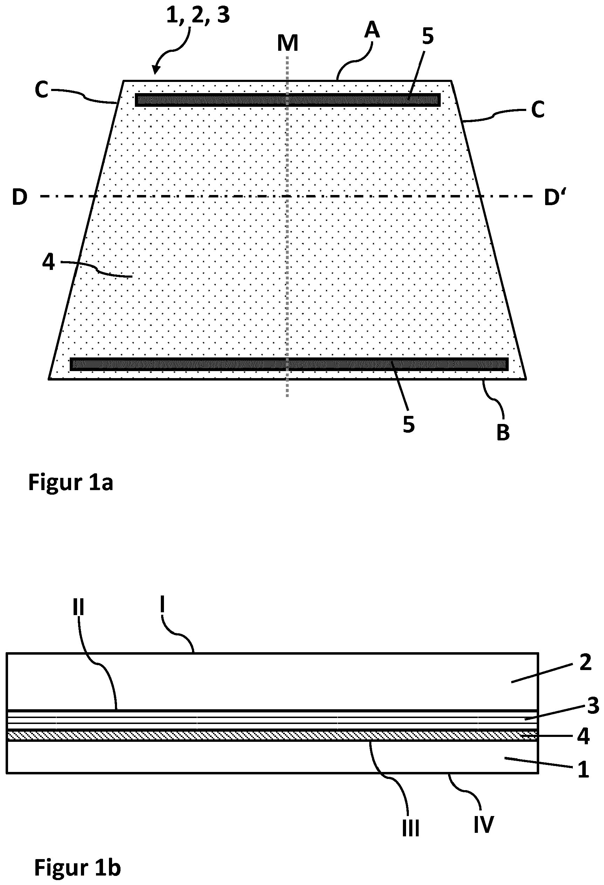

Figuren 1a und 1b zeigen ein erfindungsgemäßes Verbundglas, welches eine Innenscheibe 1 und eine Außenscheibe 2 umfasst. Die Innenscheibe 1 verfügt über eine Innenseite III und eine Außenseite IV. Die Außenscheibe 2 verfügt über eine Innenseite II und eine Außenseite I. Die Innenseiten II und III der Scheiben 1 und 2 sind über eine thermoplastische Zwischenschicht 3 miteinander verbunden. Auf der Innenseite III der Innenscheibe befindet sich eine elektrisch beheizbare Beschichtung 4. Die elektrisch beheizbare Beschichtung 4 umfasst drei leitfähige Silberschichten mit zwischen diesen angeordneten dielektrischen Schichten und verfügt über einen Schichtwiderstand von R = 0,9 Ω/□. Die elektrisch leitfähige Beschichtung 4 wurde mittels Magnetron-Sputtern auf der Innenscheibe 1 abgeschieden. Die Zwischenschicht 3 ist aus einer einzelnen Folie aus PVB mit einer Dicke von 0,76 mm ausgebildet. Auf der elektrisch beheizbaren Beschichtung 4 sind zwei Sammelleiter 5 elektrisch leitend kontaktiert, wobei ein Sammelleiter 5 im Wesentlichen parallel zur Dachkante A und ein Sammelleiter 5 im Wesentlichen parallel zur Motorkante B verläuft. Zwischen den Sammelleitern 5 ist eine Spannung von 14 V angelegt, die der üblichen Kraftfahrzeugbordspannung entspricht. Mittels des resultierenden Stromflusses durch die elektrisch beheizbare Beschichtung 4 wird das Verbundglas erwärmt. Die Kanten der Verbundscheibe, die nach Montage der Verglasung in einer Fahrzeugkarosserie, benachbart zu den A-Säulen der Karosserie verlaufen, sind als Seitenkanten C bezeichnet. Figur 1b zeigt einen Querschnitt der Anordnung gemäß Figur 1a entlang der Schnittlinie D-D`. Zwischen den Seitenkanten C verläuft in der Mitte des Verbundglases die Mittellinie M, deren Abstand zu einer Seitenkante C an jeder Stelle dem Abstand zur gegenüberliegenden Seitenkante C entspricht und die somit das Verbundglas in zwei Bereiche gleicher Größe unterteilt. Das Verbundglas ist als Windschutzscheibe eines Kraftfahrzeugs vorgesehen. Das Verbundglas ist, wie für Kraftfahrzeug-Windschutzscheiben üblich, dreidimensional gekrümmt. Das bedeutet, dass die Scheibe eine Krümmung in mehreren Richtungen des Raumes aufweist, insbesondere in horizontaler und vertikaler Richtung. Der Einfachheit halber ist das Verbundglas in der Figur jedoch schematisch plan dargestellt.

Die zur Erwärmung der Scheibe benötigte Aufheizzeit bis zum Erreichen der maximalen Temperatur wurde für das erfindungsgemäße Verbundglas gemäß Figuren 1a und 1b und andere nicht erfindungsgemäße Verbundgläser mit anderen Scheibendicken (Beispiele 1, 2 und 3, nicht Erfindungsgemäß, siehe Tabelle 1) und für ein Verbundglas mit herkömmlichen Dicken (Vergleichsbeispiel, siehe Tabelle 1) verglichen. Der Aufbau und die Geometrie aller Verbundgläser waren dabei identisch und entsprachen dem in Figuren 1a und 1b beschriebenen, ausschließlich die Dicke der Außenscheibe und der Innenscheibe wurden variiert, wie in Tabelle 1 angegeben. Die Messung wurde bei einer Umgebungstemperatur von 23 °C durchgeführt. Für die Messung der Maximaltemperatur wurde zunächst der Punkt der Scheibe mit der höchsten Temperatur bestimmt. Dies ist auf einfache Art und Weise mittels einer Thermographie möglich. Die Stelle der Scheibe mit der höchsten Temperatur ist für alle Beispiele und das Vergleichsbeispiel gleich, da das Scheibendesign identisch ist. Daraufhin wird gemessen nach welcher Zeit die Maximaltemperatur von ca. 70 °C an diesem Punkt erreicht ist.

**Tabelle 1**

| | **Scheibendicke Außenscheibe** | **Scheibendicke Innenscheibe** | **Maximaltemperatur Tₘₐₓ** | **Zeit t** |
|---|---|---|---|---|
| **Vergleichsbeispiel** | 2,1 mm | 1,6 mm | 69,3 °C | 12 min |
| **Beispiel 1** | 1,8 mm | 1,4 mm | 70,0 °C | 10 min 50 sec |
| **Beispiel 2** | 1,6 mm | 0,3 mm | 69,9 °C | 4 min 45 sec |
| **Beispiel 3** | 0,7 mm | 0,7 mm | 70,0 °C | 3 min 15 sec |

Tabelle 1 zeigt, dass durch eine Senkung der Scheibendicken die benötigte Aufheizzeit bis zu einer Temperatur von 70 °C verringert werden kann. Ein Vergleich von Beispiel 1 und Vergleichsbeispiel ergibt bereits eine Reduktion um 9,7 %. Mit der Reduzierung der Aufheizzeit geht auch eine entsprechende Senkung des Energieverbrauchs der Scheibe einher. Bei weiterer Abnahme der Scheibendicke gemäß Beispielen 2 und 3 ist eine weitere Reduzierung der Aufheizzeit und somit des Energieverbrauchs zu erkennen. Dies war für den Fachmann überraschend und unerwartet. Ferner verfügen die Verbundgläser gemäß Beispielen 1, 2 und 3 über eine hohe Stabilität und Bruchfestigkeit und sind somit für den Einsatz im Fahrzeugbereich besonders gut geeignet. Darüber hinaus ist durch eine Reduzierung der Scheibendicke eine Gewichtsabnahme des Verbundglases zu beobachten, die ebenfalls zu einem reduzierten Kraftstoffverbrauch führt.

In einem zweiten Versuch wurde für Beispiel 1 (Beispiel 1, siehe Tabelle 2) und das Vergleichsbeispiel (Vergleichsbeispiel, siehe Tabelle 2) die Temperaturverteilung nach 4 Minuten Aufheizzeit entlang der Schnittlinie D-D` gemäß Figur 1b untersucht. Die Schnittlinie D-D` schneidet die Mittellinie M dabei bei in der Mitte des sogenannten B-Sichtfeldes, wobei der zwischen D-D` und der Dachkante A liegende Anteil des B-Sichtfeldes genau so groß ist wie der zwischen D-D` und der Motorkante B liegende Anteil des B-Sichtfeldes. Die Definition des B-Sichtfeldes und dessen Bestimmung an einer vorgegebenen Scheibe sind dem Fachmann hinreichend bekannt. Dazu sei auf die Regelung 43 der Wirtschaftskommission der Vereinten Nationen für Europa (ECE R 43) einschließlich aller Änderungen bis zum 12.12.2011 (Regel 43, Revision 2 mit Amendments 1-7) verwiesen, die das A-Sich

**Tabelle 2**

| | **Minimaltemperatur Tₘᵢₙ entlang DD'** | **Maximaltemperatur Tₘₐₓ entlang DD'** | **Temperaturabweichung ΔT entlang DD'** | **Durchschnittstemperatur Tₐᵥ entlang DD'** |
|---|---|---|---|---|
| **Vergleichsbeispiel** | 29,2 °C | 29,6 °C | 0,4 °C | 29,4 °C |
| **Beispiel 1** | 30,7 °C | 31,2 °C | 0,5 °C | 30,9 °C |

Tabelle 2 bestätigt die in Tabelle 1 gezeigten Ergebnisse insofern, dass die Minimaltemperatur, die Maximaltemperatur und die durchschnittliche Temperatur bei einer Verbundglasscheibe gemäß nicht erfindungsgemäßem Beispiel 1 bei gleicher Aufheizzeit von 4 Minuten im Vergleich zu Vergleichsbeispiel 1 erhöht werden können. Die Homogenität der Temperatur, hier gegeben durch die Temperaturabweichung entlang DD` bleibt dabei ungefähr konstant.

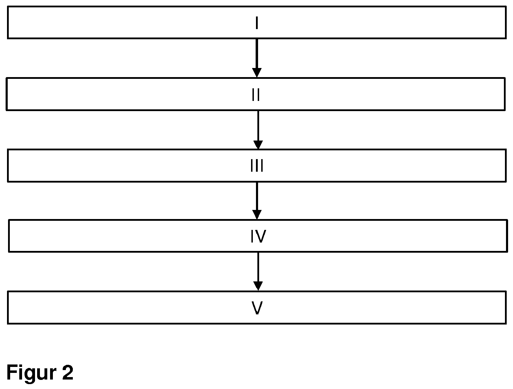

Figur 2 zeigt ein Flussdiagramm eines Ausführungsbeispiels des erfindungsgemäßen Verfahrens zur Herstellung eines erfindungsgemäßen Verbundglases umfassend die Schritte:
I Gemeinsames Biegen einer Innenscheibe 1 und einer Außenscheibe 2
II Chemisches Vorspannen der Innenscheibe 1 bei 460 °C in einer Schmelze aus KNO3
III Waschen der Innenscheibe 1 mit H₂SO₄
IV Anordnen der Innenscheibe 1, einer thermoplastischen Zwischenschicht 3 und der Außenscheibe 2 übereinander
V Verbinden der Innenscheibe 1 mit der Außenscheibe 2 durch Lamination

Die Schritte II und III sind dabei optional. Sofern Schritt II erfolgt, sollte jedoch auch Schritt III durchgeführt werden. Wenn das chemische Vorspannen gemäß Schritt II nicht gewünscht ist, kann nach Schritt I mit Schritt IV fortgefahren werden.

Die Innenscheibe 1 und die Außenscheibe 2 werden in einem planen Ausgangszustand bereitgestellt. Die Innenscheibe 1 und die Außenscheibe 2 werden zusammen einem Biegeprozess unterzogen und kongruent gebogen in ihre endgültige dreidimensionale Form.

Optional wird die Innenscheibe 1 nach dem Biegen chemisch vorgespannt. Die Innenscheibe 1 wird dazu nach dem Biegen langsam abgekühlt, um thermische Spannungen zu vermeiden. Eine geeignete Abkühlrate beträgt beispielsweise 0,1 °C/sec. Die Innenscheibe 1 wird anschließend für einen Zeitraum von einigen Stunden, beispielsweise 4 Stunden, bei einer Temperatur von 460 °C mit einer Schmelze aus Kaliumnitrat behandelt und dabei chemisch vorgespannt. Die Behandlung bewirkt einen diffusionsgetriebenen Austausch von Natriumionen durch größere Kaliumionen über die Oberflächen des Glases. Dadurch werden Oberflächendruckspannungen erzeugt. Die Innenscheibe 1 wird anschließend abgekühlt und dann mit Schwefelsäure gewaschen, um Rückstände des Kaliumnitrats zu entfernen.

Anschließend wird die thermoplastische Zwischenschicht 3 zwischen Innenscheibe 1 und Außenscheibe 2 angeordnet. Der Stapel aus Innenscheibe 1, Zwischenschicht 3 und Außenscheibe 2 wird auf herkömmliche Weise durch Lamination verbunden, beispielsweise durch ein Vakuumsackverfahren.

### Bezugszeichenliste:

- (1): Innenscheibe
- (2): Außenscheibe
- (3): thermoplastische Zwischenschicht
- (4): elektrisch beheizbare Beschichtung
- (5): Sammelleiter
- (A): Dachkante
- (B): Motorkante
- (C): Seitenkanten
- (M): Mittellinie
- D-D`: Schnittlinie
- (I): Außenseite der Außenscheibe
- (II): Innenseite der Außenscheibe
- (III): Innenseite der Innenscheibe
- (IV): Außenseite der Innenscheibe

## Patentansprüche

1. Fahrzeug-Verbundglas zur Abtrennung eines Fahrzeuginnenraums von einer äußeren Umgebung, mindestens umfassend:
- eine Innenscheibe (1) aus Glas umfassend eine Innenseite (III) und eine Außenseite (IV),
- eine Außenscheibe (2) aus Glas umfassend eine Innenseite (II) und eine Außenseite (I),
- eine thermoplastische Zwischenschicht (3), welche die Innenseite (III) der Innenscheibe (1) mit der Innenseite (II) der Außenscheibe (2) verbindet,
wobei
- auf der Innenseite (III) der Innenscheibe (1) oder der Innenseite (II) der Außenscheibe (2) eine elektrisch beheizbare Beschichtung (4) aufgebracht ist,
- die Außenscheibe (2) eine nicht-vorgespannte Scheibe ist und die Dicke der Außenscheibe (2) im Bereich von 0,7 mm bis 1,4 mm liegt,
- die Außenscheibe (2) dicker ist als die Innenscheibe (1), wobei die Innenscheibe (1) eine Dicke von 0,6 mm bis 1,0 mm aufweist.

2. Fahrzeug-Verbundglas nach Anspruch 1, das eine Windschutzscheibe ist.

3. Fahrzeug-Verbundglas nach einem der Ansprüche 1 bis 2, wobei die thermoplastische Zwischenschicht (3) durch eine einzelne thermoplastische Folie ausgebildet ist, die bevorzugt zumindest Polyvinylbutyral (PVB), Ethylenvinylacetat (EVA), Polyurethan (PU) oder Gemische oder Copolymere oder Derivate davon enthält.

4. Fahrzeug-Verbundglas nach einem der Ansprüche 1 bis 3, wobei die thermoplastische Zwischenschicht (3) eine Dicke von 0,2 mm bis 1 mm aufweist.

5. Fahrzeug-Verbundglas nach einem der Ansprüche 1 bis 4, wobei die elektrisch beheizbare Beschichtung (2) mindestens eine elektrisch leitfähige Schicht umfasst, die zumindest Silber oder ein elektrisch leitfähiges Oxid enthält und bevorzugt eine Dicke von 10 nm bis 200 nm aufweist.

6. Fahrzeug-Verbundglas nach Anspruch 1 bis 5, wobei die Innenscheibe (1) eine chemisch vorgespannte Scheibe ist und die elektrisch beheizbare Beschichtung (2) auf der Innenseite (II) der Außenscheibe (2) aufgebracht ist.

7. Fahrzeug-Verbundglas nach Anspruch 6, wobei die Innenscheibe (1) Aluminosilikatglas enthält und bevorzugt von 55 Gew-% bis 72 Gew-% Siliziumoxid (SiO₂), von 5 Gew-% bis 10 Gew-% Aluminiumoxid (Al₂O₃), von 10 Gew-% bis 15 Gew-% Natriumoxid (Na₂O), von 7 Gew-% bis 12 Gew-% Kaliumoxid (K₂O) und von 6 Gew-% bis 11 Gew-% Magnesiumoxid (MgO) enthält.

8. Fahrzeug-Verbundglas nach Anspruch 1 bis 5, wobei die Innenscheibe (1) eine nicht-vorgespannte Scheibe ist und Borosilikatglas enthält.

9. Fahrzeug-Verbundglas nach einem der Ansprüche 1 bis 8, wobei die Außenscheibe Kalk-Natron-Glas enthält.

10. Verfahren zur Herstellung eines Fahrzeug-Verbundglases nach einem der Ansprüche 1 bis 9, wobei
(a) die Innenscheibe (1), die thermoplastische Zwischenschicht (3) und die Außenscheibe (2) in dieser Reihenfolge flächenmäßig übereinander angeordnet werden und
(b) die Innenscheibe (1) und die Außenscheibe (2) durch Lamination miteinander verbunden werden.

11. Verfahren nach Anspruch 10, wobei die Innenscheibe (1) und die Außenscheibe (2) gemeinsam gebogen werden.

12. Verfahren nach Anspruch 10 oder 11, wobei die Innenscheibe (1) in gebogenem Zustand chemisch vorgespannt wird.

13. Verwendung eines Fahrzeug-Verbundglases nach einem der Ansprüche 1 bis 9 in einem Kraftfahrzeug, bevorzugt einem Personenkraftwagen, insbesondere als Windschutzscheibe, Seitenscheibe, Rückscheibe oder Dachscheibe.

## Claims

1. Vehicular laminated glass for separating a vehicle interior from an external environment, at least comprising:
- an inner pane (1) made of glass comprising an inner side (III) and an outer side (IV),
- an outer pane (2) made of glass comprising an inner side (II) and an outer side (I),
- a thermoplastic intermediate layer (3), which bonds the inner side (III) of the inner pane (1) to the inner side (II) of the outer pane (2),
wherein
- an electrically heatable coating (4) is applied on the inner side (III) of the inner pane (1) or the inner side (II) of the outer pane (2),
- the outer pane (2) is a non-prestressed pane and the thickness of the outer pane (2) is in the range from 0.7 mm to 1.4 mm,
- the outer pane (2) is thicker than the inner pane (1), wherein the inner pane (1) has a thickness of 0.6 mm to 1.0 mm.

2. Vehicular laminated glass according to claim 1, which is a windshield.

3. Vehicular laminated glass according to one of claims 1 through 2, wherein the thermoplastic intermediate layer (3) is formed by a single thermoplastic film, which preferably contains at least polyvinyl butyral (PVB), ethylene vinyl acetate (EVA), polyurethane (PU), or mixtures or copolymers or derivatives thereof.

4. Vehicular laminated glass according to one of claims 1 through 3, wherein the thermoplastic intermediate layer (3) has a thickness of 0.2 mm to 1 mm.

5. Vehicular laminated glass according to one of claims 1 through 4, wherein the electrically heatable coating (2) includes at least one electrically conductive layer, which contains at least silver or an electrically conductive oxide and preferably has a thickness of 10 nm to 200 nm.

6. Vehicular laminated glass according to claim 1 through 5, wherein the inner pane (1) is a chemically tempered pane and the electrically heatable coating (2) is applied on the inner side (II) of the outer pane (2).

7. Vehicular laminated glass according to claim 6, wherein the inner pane (1) contains aluminosilicate glass and preferably from 55 wt.-% to 72 wt.-% silicon oxide (SiO₂), from 5 wt.-% to 10 wt.-% aluminum oxide (Al₂O₃), from 10 wt.-% to 15 wt.-% sodium oxide (Na₂O), from 7 wt.-% to 12 wt.-% potassium oxide (K₂O), and from 6 wt.-% to 11 wt.-% magnesium oxide (MgO).

8. Vehicular laminated glass according to claim 1 through 5, wherein the inner pane (1) is a non-prestressed pane and contains borosilicate glass.

9. Vehicular laminated glass according to one of claims 1 through 8, wherein the outer pane contains soda lime glass.

10. Method for producing a vehicular laminated glass according to one of claims 1 through 9, wherein
(a) the inner pane (1), the thermoplastic intermediate layer (3), and the outer pane (2) are arranged areally atop one another in this order, and
(b) the inner pane (1) and the outer pane (2) are bonded to one another by lamination.

11. Method according to claim 10, wherein the inner pane (1) and the outer pane (2) are bent together.

12. Method according to claim 10 or 11, wherein the inner pane (1) is chemically tempered in the bent state.

13. Use of a vehicular laminated glass according to one of claims 1 through 9 in a motor vehicle, preferably a passenger car, in particular as a windshield, side window, rear window, or roof panel.

## Revendications

1. Verre feuilleté pour véhicule destiné à séparer l'intérieur d'un véhicule d'un environnement extérieur, comprenant au moins
- une vitre intérieure (1) en verre comprenant une face intérieure (III) et une face extérieure (IV),
- une vitre extérieure (2) en verre comprenant une face intérieure (II) et une face extérieure (I),
- une couche intermédiaire thermoplastique (3), qui relie la face intérieure (III) de la vitre intérieure (1) à la face intérieure (II) de la vitre extérieure (2),
dans laquelle
- un revêtement électriquement chauffant (4) est appliqué sur la face intérieure (III) de la vitre intérieure (1) ou sur la face intérieure (II) de la vitre extérieure (2),
- la vitre extérieure (2) est une vitre non précontrainte et l'épaisseur de la vitre extérieure (2) est comprise entre 0,7 mm et 1,4 mm,
- la vitre extérieure (2) est plus épaisse que la vitre intérieure (1), la vitre intérieure (1) ayant une épaisseur comprise entre 0,6 mm et 1,0 mm.

2. Verre feuilleté pour véhicule selon la revendication 1, qui est un pare-brise.

3. Verre feuilleté pour véhicule selon l'une des revendications 1 à 2, dans lequel la couche intermédiaire thermoplastique (3) est formée d'un seul film thermoplastique, qui contient de préférence au moins du polybutyral de vinyle (PVB), de l'éthylène-acétate de vinyle (EVA), du polyuréthane (PU), ou des mélanges, des copolymères ou des dérivés de ceux-ci.

4. Verre feuilleté pour véhicules selon l'une des revendications 1 à 3, dans lequel la couche intermédiaire thermoplastique (3) a une épaisseur de 0,2 mm à 1 mm.

5. Verre feuilleté pour véhicules selon l'une des revendications 1 à 4, dans lequel le revêtement chauffant électrique (2) comprend au moins une couche conductrice d'électricité, qui contient au moins de l'argent ou un oxyde conducteur d'électricité et a de préférence une épaisseur de 10 nm à 200 nm.

6. Verre feuilleté pour véhicules selon les revendications 1 à 5, dans lequel la vitre intérieure (1) est une vitre trempée chimiquement et le revêtement chauffant électrique (2) est appliqué sur la face intérieure (II) de la vitre extérieure (2).

7. Verre feuilleté pour véhicules selon la revendication 6, dans lequel la vitre intérieure (1) contient un verre d'aluminosilicate et de préférence de 55 % à 72 % en poids d'oxyde de silicium (SiO₂), de 5 % à 10 % en poids d'oxyde d'aluminium (Al₂O₃), de 10 % à 15 % en poids d'oxyde de sodium (Na₂O), de 7 % à 12 % en poids d'oxyde de potassium (K₂O), et de 6 % à 11 % en poids d'oxyde de magnésium (MgO).

8. Verre feuilleté pour véhicules selon les revendications 1 à 5, dans lequel la vitre intérieure (1) est une vitre non précontrainte et contient du verre borosilicaté.

9. Verre feuilleté pour véhicules selon l'une des revendications 1 à 8, dans lequel la vitre extérieure contient du verre sodocalcique.

10. Procédé de fabrication d'un verre feuilleté pour véhicule selon l'une des revendications 1 à 9, dans lequel
(a) la vitre intérieure (1), la couche intermédiaire thermoplastique (3) et la vitre extérieure (2) sont disposées les unes au-dessus des autres dans cet ordre, et
(b) le panneau intérieur (1) et le panneau extérieur (2) sont liés l'un à l'autre par laminage.

11. Procédé selon la revendication 10, dans lequel le panneau intérieur (1) et le panneau extérieur (2) sont pliés ensemble.

12. Procédé selon la revendication 10 ou 11, dans lequel le panneau intérieur (1) est trempé chimiquement à l'état plié.

13. Utilisation d'un verre feuilleté de véhicule selon l'une des revendications 1 à 9 dans un véhicule automobile, de préférence une voiture de tourisme, en particulier comme pare-brise, vitre latérale, vitre arrière ou panneau de toit.
